(19) **Europäisches Patentamt**
**European Patent Office**
**Office européen des brevets**

(11) **EP 2 794 288 B2**

(12) **NEW EUROPEAN PATENT SPECIFICATION**
After opposition procedure

(45) Date of publication and mention
of the opposition decision:
**06.11.2019 Bulletin 2019/45**

(45) Mention of the grant of the patent:
**08.06.2016 Bulletin 2016/23**

(21) Application number: **12826561.8**

(22) Date of filing: **24.12.2012**

(51) Int Cl.:
*B60C 1/00* (2006.01)　　　*C08L 7/00* (2006.01)
*C08L 21/00* (2006.01)　　*C08L 23/16* (2006.01)
*B60C 13/00* (2006.01)　　*B60C 13/04* (2006.01)
*C08K 5/00* (2006.01)　　*C08L 23/28* (2006.01)

(86) International application number:
**PCT/IB2012/057692**

(87) International publication number:
**WO 2013/093896 (27.06.2013 Gazette 2013/26)**

(54) **COLOURED TYRE PORTIONS**

FARBIGE REIFENTEILEN

PARTIES DE PNEU COLORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 IT TO20111207**

(43) Date of publication of application:
**29.10.2014 Bulletin 2014/44**

(73) Proprietor: **Bridgestone Corporation**
**Tokyo 104-8340 (JP)**

(72) Inventors:
• **FIORENZA, Paolo**
**I-00156 Roma (IT)**

• **FORTE, Gianluca**
**I-00156 Roma (IT)**

(74) Representative: **Marchetti, Alessio**
**Bridgestone Technical Center Europe S.p.A.**
**Via Fosso del Salceto, 13/15**
**00128 Roma (IT)**

(56) References cited:
**EP-A1- 1 580 232　　WO-A1-2011/070429**
**DE-A1- 19 613 801　　JP-A- 63 248 898**
**US-A1- 2004 055 680　US-A1- 2005 217 782**
**US-B1- 6 207 077　　US-B1- 6 221 453**
**US-B1- 6 431 236　　US-B1- 6 807 995**

EP 2 794 288 B2

**Description**

TECHNICAL FIELD

The present invention relates to coloured tyre portions.

Hereinafter, the term 'optical whitener' refers to a substance which absorbs part of the incident radiation in the invisible ultraviolet region, and reflects it at longer wavelengths in the upper part of the visible spectrum, thus making the reflected spectrum bluer and therefore seemingly whiter.

BACKGROUND ART

In recent years, demand has increased for coloured tyre portions, particularly sidewalls, for various, not least of all, aesthetic reasons.

Current technology is based on using coloured rubber compounds produced using appropriate pigments.

The coloured rubber is connected to the black rubber of the tyre at the tyre building stage.

A drawback of this technology lies in fast fading of the coloured portion, mainly due to chemical agents, such as antioxidants, migrating from the inner tyre layers to the coloured compound.

Another recently adopted solution is to insert between the tyre shoulder and the coloured layer a barrier layer made from a composition designed to minimize migration of the chemical agents.

The Applicant has devised a method of producing coloured tyre portions, wherein a polymer barrier layer, formed by drying an aqueous dispersion, is deposited on the part of the tyre for colouring. This method is described in Patent Applications TO2009A000964 and TO2010A000850 included herein by way of reference.

Even with the barrier layer, however, in high-temperature operating conditions or after long use, the chemical agents still manage to get through the barrier layer to the coloured layer, thus resulting in fading.

White coloured portions, often on the sidewalls of the tyre, pose the most serious fading problem.

A need is therefore felt for a method of forming coloured tyre portions, which guarantees colour fastness regardless of the operating conditions and working life of the tyre.

The Applicant has discovered that fading of the coloured portion is mainly due to the chemical agents from the underlying portions interacting with the UV radiation impinging on them.

DISCLOSURE OF INVENTION

One object of the present invention is a coloured tyre portion as claimed in claim 1.

Preferably, said dye is a water-based dye, a polyurethane dye, or a photo-cross-linkable dye when subjected to UV radiation.

Preferably, the barrier layer is formed by drying an aqueous dispersion.

Preferably, the barrier layer aqueous dispersion comprises at least one cross-linkable polymer base and a surfactant of molecular formula (I)

$$(R_1CONR_2CHR_3COO^-)n \ X^{n+} \qquad \text{(I)}$$

where:

$R_1$ is an aliphatic group $C_6$-$C_{23}$
$R_2$ is H or an aliphatic group $C_1$-$C_8$
$R_3$ is H or an aliphatic or aromatic group $C_1$-$C_8$
X is a metallic cation, preferably an alkaline cation, and
n is an integer from 1 to 3.

Preferably, the aliphatic group $R_1$ comprises a double bond.

Preferably, the barrier layer aqueous dispersion comprises at least one cross-linkable polymer base and a surfactant of molecular formula (II)

$$([R_4R_5R_6NR_8(NR_7R_9R_{10})n]^{(n+1)+})y(n+1)X^{y-} \qquad \text{(II)}$$

where:

X is an atom or an anionic group

$R_4$, $R_5$ and $R_6$, which are the same or different, are each $C_mH_{2m+1}$, where m is 1 to 3, or $CH_2CHCH_2$ or $CHCHCH_3$

$R_7$, $R_9$ e $R_{10}$, which are the same or different, are each $CH_2CHCH_2$ or $CHCHCH_3$

n is 0 or 1

y is 1, if n is 1; y is 1 or 2, if n is 0

$R_8$ is an aliphatic group $C_{15}$-$C_{22}$ when n is 0, and is an aliphatic group $C_8$-$C_{16}$ when n is 1

when n is 0, at least one of $R_4$, $R_5$, $R_6$ and $R_8$ comprises a double bond.

Preferably, $R_7$, $R_8$ and $R_9$ are $CH_2CHCH_2$, and, more preferably, n is 1 and $R_8$ is a saturated aliphatic group.

Preferably, $R_8$ comprises a double bond, and n is 0.

Another object of the present invention is a tyre comprising a coloured portion in accordance with the present invention.

Another object of the present invention is use of an optical whitener as claimed in claim 10.

BEST MODE FOR CARRYING OUT THE INVENTION

The following are non-limiting examples for a clearer understanding of the present invention.

EXAMPLES

Below, two examples (EXAMPLES A) are described to show the effectiveness of the optical whitener on a layer of coloured rubber comprising antioxidants and subjected to UV radiation.

EXAMPLES B relate to coloured portions.

EXAMPLES C relate to coloured portions according to the solution of the present invention, and a relative control example.

EXAMPLES A

Two layers of coloured rubber were formed from respective compounds with the compositions, in phr, shown in Table I.

TABLE I

|  | A1 | A2 |
|---|---|---|
| NR | 40 | 40 |
| Cl-IIR | 40 | 40 |
| EPDM | 20 | 20 |
| $TiO_2$ | 60 | 60 |
| Sulphur | 0.75 | 0.75 |
| MBTS | 1.0 | 1.0 |
| ZnO | 7.0 | 7.0 |
| Stearic acid | 1.0 | 1.0 |
| 6PPD | 0.5 | 0.5 |
| Umbelliferone | 30 | -- |
| $\Delta E$ | 81.6 | 100 |

NR stands for natural rubber; Cl-IIR for chlorine-butyl rubber; and EPDM for ethylene-propylene-diene.

As shown by the compositions in Table I, compounds A1 and A2 differ solely as to the presence or absence of the optical whitener (Umbelliferone), i.e. only compound A1 features the technical solution according to the present invention.

The rubber layers made from the two compounds were exposed to UV radiation (366nm) for seven consecutive days, after which, fading was determined using a fade index as established at the 1976 International Commission on Illumination. The fade index $\Delta E$ is defined by the formula :

$$\Delta E = [(\Delta L)^2 + (\Delta a)^2 + (\Delta b)^2]^{1/2}$$

where :

L is luminosity; a is red-green light sensation; and b is yellow-blue light sensation. More specifically, fading was measured using a Minolta CM 2002 spectrophotometer.

The fade indexes in the last line of Table I are indexed to the control compound A2 layer result.

The results show how the presence of compounds such as antioxidants (6PPD) in the coloured rubber causes fading when exposed to UV radiation, and how fading is counteracted visually by the simultaneous presence of an optical whitener.

EXAMPLES B

Three coloured rubber layers were formed from respective compounds with the compositions, in phr, shown in Table II.

TABLE II

|  | B1 | B2 | B3 |
|---|---|---|---|
| NR | 40 | 40 | 40 |
| CI-IIR | 40 | 40 | 40 |
| EPDM | 20 | 20 | 20 |
| $TiO_2$ | 60 | 60 | 60 |
| Sulphur | 0.75 | 0.75 | 0.75 |
| MBTS | 1.0 | 1.0 | 1.0 |
| ZnO | 7.0 | 7.0 | 7.0 |
| Stearic acid | 1 | 1 | 1 |
| 1Cumarin | 30 | -- | -- |
| Umbelliferone | -- | 30 | -- |
| $\Delta E$ | 84.0 | 65.0 | 100 |

Composition B2 comprising an optical whitener (Umbelliferone) represents a compound in accordance with the invention, and compound B1 and B3 represent two specific control compounds.

Three coloured portions were made from compounds B1-B3 and connected to conventional black compounds used to form tyre sidewalls and comprising 1.5 phr of antioxidant 6PPD.

Coloured portions B1-B3, each made by connecting a respective coloured compound B1-B3 to a conventional tyre sidewall compound, were aged thermally to cause migration of the antioxidants in the coloured compound portion. More specifically, coloured portions B1-B3 were kept at a temperature of 70°C for 6 days.

The aged portions were then exposed to UV radiation (366nm) for 7 days.

Following exposure, the fade indexes were determined as described above.

The fade indexes in the last line of Table II are indexed to that of the control compound B3 layer.

As shown clearly, the layer made from control compound B1 and B3 show much greater fading than the coloured layers formed in accordance with the present invention. More specifically, the layer made from the compound comprising Umbelliferone shows far less fading than the control compound layer.

EXAMPLES C

Preparation of barrier layers Ca and Cb

Coloured tyre portions were formed using the method according to the present invention.

The barrier layers used were formed by drying respective aqueous dispersions. By way of example, the dispersions were made by dispersing all the Table I ingredients simultaneously in 1 litre of water. The resulting aqueous dispersion was stirred mechanically for 30 minutes and then sonicated for 15 minutes.

The compositions, in phr, of the two barrier layers formed by drying respective aqueous dispersions are shown in Table III.

TABLE III

|  | Ca | Cb |
|---|---|---|
| CI-IIR | 100 | 100 |
| CARBON BLACK | 50 | 50 |
| RESIN | 10 | 10 |
| ZnO | 1.5 | 1.5 |
| SULPHUR | 2.8 | 2.8 |
| ACCELERANTS | 1.5 | 1.5 |
| SURFACTANT (a) | 2.0 | -- |
| SURFACTANT (b) | -- | 2.0 |

Surfactant (a) is of molecular formula $CH_3(CH_2)_7CHCH(CH_2)_7CONHCH_2COO^-Na^+$; and surfactant (b) is of molecular formula $[(CH_3)_3N(CH_2)_8CHCH(CH_2)_7(CH_3]^+I^-$.

The aqueous dispersion was deposited on the shoulder portion for colouring, and was dried to form the barrier layer.

Preparation of coloured portions Ca1, Cb1, Ca2 and Cb2

A water-based white dye was applied to each of the barrier layers formed as described above. More specifically, the water-based dye is one of a group of paints known as 'VERNICI IMC IDRO' produced and marketed by SIVAM VERNICI SPA.

To form coloured portions Ca1 and Cb1, a 30% by dry weight concentration of Umbelliferone was added to the water-based dye as an optical whitener, whereas, to form coloured portions Ca2 and Cb2, the water-based dye was used as it is, i.e. with no added optical whitener. Coloured portions Ca2 and Cb2 thus constitute two control examples.

As described for portions B1-B3, coloured portions Ca1, Cb1, Ca2 and Cb2 were aged thermally to cause migration of the antioxidants in the coloured compound portion, and were then exposed to UV radiation (366nm) for 7 days.

Following exposure, the fade indexes were determined as described above.

In Table IV, the fade indexes of coloured portions Ca1 and Cb1 are indexed to those of respective control examples Ca2 and Cb2.

TABLE IV

|  | Ca1 | Ca2 | Cb1 | Cb2 |
|---|---|---|---|---|
| $\Delta E$ | 74 | 100 | 78 | 100 |

As shown clearly in Table IV, coloured portions Ca1 and Cb1 show much less noticeable fading than respective control examples Ca2 and Cb2.

**Claims**

1. A coloured tyre portion comprising a highly impermeable barrier layer on the part of the tyre for colouring; and a dye on said barrier layer; said dye comprising an optical whitener; said coloured tyre portion being **characterized in that** said optical whitener is Umbelliferone.

2. A coloured tyre portion as claimed in Claim 1, **characterized in that** said dye is a water-based dye, a polyurethane dye, or a photo-cross-linkable dye when subjected to UV radiation.

3. A coloured tyre portion as claimed in Claim 2, **characterized in that** the barrier layer is formed by drying an aqueous dispersion.

4. A coloured tyre portion as claimed in Claim 3, **characterized in that** the barrier layer aqueous dispersion comprises at least one cross-linkable polymer base and a surfactant of molecular formula (I)

$$(R_1CONR_2CHR_3COO^-)n\ X^{n+} \qquad (I)$$

where:

$R_1$ is an aliphatic group $C_6$-$C_{23}$
$R_2$ is H or an aliphatic group $C_1$-$C_8$
$R_3$ is H or an aliphatic or aromatic group $C_1$-$C_8$
X is a metallic cation, preferably an alkaline cation, and
n is an integer from 1 to 3.

5. A coloured tyre portion as claimed in Claim 4, **characterized in that** the aliphatic group $R_1$ comprises a double bond.

6. A coloured tyre portion as claimed in Claim 3, **characterized in that** the barrier layer aqueous dispersion comprises at least one cross-linkable polymer base and a surfactant of molecular formula (II)

$$([R_4R_5R_6NR_8(NR_7R_9R_{10})n]^{(n+1)+})y(n+1)X^{y-} \qquad (II)$$

where:

X is an atom or an anionic group
$R_4$, $R_5$ and $R_6$, which are the same or different, are each $C_mH_{2m+1}$, where m is 1 to 3, or $CH_2CHCH_2$ or $CHCHCH_3$
$R_7$, $R_9$ e $R_{10}$, which are the same or different, are each $CH_2CHCH_2$ or $CHCHCH_3$
n is 0 or 1
y is 1, if n is 1; y is 1 or 2, if n is 0
$R_8$ is an aliphatic group $C_{15}$-$C_{22}$ when n is 0, and is an aliphatic group $C_8$-$C_{16}$ when n is 1
when n is 0, at least one of $R_4$, $R_5$, $R_6$ and $R_8$ comprises a double bond.

7. A coloured tyre portion as claimed in Claim 6, **characterized in that** $R_7$, $R_8$ and $R_9$ are $CH_2CHCH_2$.

8. A coloured tyre portion as claimed in Claim 6, **characterized in that** n is 1 and $R_8$ is a saturated aliphatic group.

9. A tyre comprising a coloured portion as claimed in one of the foregoing Claims.

10. Use of an optical whitener in a dye that is applied on a highly impermeable barrier layer which is placed on a part of a tyre for colouring; said optical whitener being Umbelliferone.


**Patentansprüche**

1. Gefärbter Reifenabschnitt, umfassend eine hochgradig undurchlässige Sperrschicht auf dem zu färbenden Teil des Reifens; und einen Farbstoff auf der Sperrschicht; der Farbstoff umfassend einen optischen Aufheller; wobei der gefärbte Reifenabschnitt **dadurch gekennzeichnet ist, dass** der optische Aufheller Umbeliferon ist.

2. Gefärbter Reifenabschnitt nach Anspruch 1, **dadurch gekennzeichnet, dass** der Farbstoff ein Farbstoff auf Wasserbasis, ein Polyurethanfarbstoff oder, wenn einer UV-Strahlung ausgesetzt, ein photoquervernetzbarer Farbstoff ist.

3. Gefärbter Reifenabschnitt nach Anspruch 2, **dadurch gekennzeichnet, dass** die Sperrschicht durch Trocknen einer wässrigen Dispersion gebildet wird.

4. Gefärbter Reifenabschnitt nach Anspruch 3, **dadurch gekennzeichnet, dass** die wässrige Dispersion der Sperrschicht mindestens eine quervernetzbare Polymerbasis und ein Tensid der Molekularformel (I) umfasst

$$(R_1CONR_2CHR_3COO^-)nX^{n+} \qquad (I)$$

worin:

R$_1$ eine aliphatische Gruppe C$_6$-C$_{23}$ ist
R$_2$ H oder eine aliphatische Gruppe C$_1$-C$_8$ ist
R$_3$ H oder eine aliphatische oder aromatische Gruppe C$_1$-C$_8$ ist
X ein metallisches Kation, vorzugsweise ein alkalisches Kation ist, und
n eine ganze Zahl von 1 bis 3 ist.

**5.** Gefärbter Reifenabschnitt nach Anspruch 4, **dadurch gekennzeichnet, dass** die aliphatische Gruppe R$_1$ eine Doppelbindung umfasst.

**6.** Gefärbter Reifenabschnitt nach Anspruch 3, **dadurch gekennzeichnet, dass** die wässrige Dispersion der Sperrschicht mindestens eine quervernetzbare Polymerbasis und ein Tensid der Molekularformel (II) umfasst

$$([R_4R_5R_6NR_8(NR_7R_9R_{10})n]^{(n+1)+})y(n+I)X^{Y-} \qquad (II)$$

worin:

X ein Atom oder eine anionische Gruppe ist
R$_4$, R$_5$ und R$_6$, welche gleich oder verschieden sind, jeweils C$_m$H$_{2m+1}$ sind, worin m 1 bis 3 ist, oder CH$_2$CHCH$_2$ oder CHCHCH$_3$ sind
R$_7$, R$_9$ und R$_{10}$, welche gleich oder verschieden sind, jeweils CH$_2$CHCH$_2$ oder CHCHCH$_3$ sind
n 0 oder 1 is
y 1 ist, wenn n 1 ist; y 1 oder 2 ist, wenn n 0 ist
R$_8$ eine aliphatische Gruppe C$_{15}$-C$_{22}$ ist, wenn n 0 ist, und eine aliphatische Gruppe C$_8$-C$_{16}$ ist, wenn n 1 ist wenn n 0 ist, mindestens eines von R$_4$, R$_5$, R$_6$ und R$_8$ eine Doppelbindung umfasst.

**7.** Gefärbter Reifenabschnitt nach Anspruch 6, **dadurch gekennzeichnet, dass** R$_7$, R$_8$ und R$_9$ CH$_2$CHCH$_2$ sind.

**8.** Gefärbter Reifenabschnitt nach Anspruch 6, **dadurch gekennzeichnet, dass** n 1 ist und R$_8$ eine gesättigte aliphatische Gruppe ist.

**9.** Reifen, umfassend einen gefärbten Abschnitt nach einem der vorstehenden Ansprüche.

**10.** Verwenden eines optischen Aufhellers in einem Farbstoff, der auf eine hochgradig undurchlässige Sperrschicht aufgetragen ist, die auf dem zu färbenden Reifenabschnitt aufgetragen werden kann; wobei der optische Aufheller Umbelliferon ist.


**Revendications**

**1.** Partie de pneumatique colorée comprenant une couche de barrière hautement imperméable sur la partie du pneumatique à colorer ; et un colorant sur ladite couche de barrière ; ledit colorant comprenant un agent blanchissant optique ; ladite partie de pneumatique colorée étant **caractérisée en ce que** ledit agent blanchissant optique est ombelliférone.

**2.** Partie de pneumatique colorée selon la revendication 1, **caractérisée en ce que** ledit colorant est un colorant à base d'eau, un colorant polyuréthane, ou un colorant photo-réticulable lorsqu'il est soumis à un rayonnement UV.

**3.** Partie de pneumatique colorée selon la revendication 2, **caractérisée en ce que** la couche de barrière est formée par séchage d'une dispersion aqueuse.

**4.** Partie de pneumatique colorée selon la revendication 3, **caractérisée en ce que** la dispersion aqueuse de couche de barrière comprend au moins une base polymère réticulable et un agent tensioactif de formule moléculaire (I)

$$(R_1CONR_2CHR_3COO^-)nX^{n+} \qquad (I)$$

où :

R$_1$ est un groupe aliphatique en C$_6$ à C$_{23}$
R$_2$ est H ou un groupe aliphatique en C$_1$ à C$_8$
R$_3$ est H ou un groupe aliphatique ou aromatique en C$_1$ à C$_8$
X est un cation métallique, de préférence un cation alcalin, et
n est un nombre entier allant de 1 à 3.

5. Partie de pneumatique colorée selon la revendication 4, **caractérisée en ce que** le groupe aliphatique R$_1$ comprend une double liaison.

6. Partie de pneumatique colorée selon la revendication 3, **caractérisée en ce que** la dispersion aqueuse de couche de barrière comprend au moins une base polymère réticulable et un agent tensioactif de formule moléculaire (II)

$$([R_4R_5R_6NR_8(NR_7R_9R_{10})n]^{(n+1)+})y(n+1)X^{y-} \qquad (II)$$

où :

X est un atome ou un groupe anionique
R$_4$, R$_5$ et R$_6$, qui sont identiques ou différents, sont chacun C$_m$H$_{2m+1}$, où m va de 1 à 3, ou CH$_2$CHCH$_2$ ou CHCHCH$_3$
R$_7$, R$_9$ et R$_{10}$, qui sont identiques ou différents, sont chacun CH$_2$CHCH$_2$ ou CHCHCH$_3$
n vaut 0 ou 1
y vaut 1, si n vaut 1 ; y vaut 1 ou 2, si n vaut 0
R$_8$ est un groupe aliphatique en C$_{15}$ à C$_{22}$ lorsque n vaut 0, et est un groupe aliphatique en C$_8$ à C$_{16}$ lorsque n vaut 1
lorsque n vaut 0, au moins l'un parmi R$_4$, R$_5$, R$_6$ et R$_8$ comprend une double liaison.

7. Partie de pneumatique colorée selon la revendication 6, **caractérisée en ce que** R$_7$, R$_8$ et R$_9$ sont CH$_2$CHCH$_2$.

8. Partie de pneumatique colorée selon la revendication 6, **caractérisée en ce que** n vaut 1 et R$_8$ est un groupe aliphatique saturé.

9. Pneumatique comprenant une partie colorée selon l'une des revendications précédentes.

10. Utilisation d'un agent blanchissant optique dans un colorant qui peut être appliqué à une couche de barrière hautement imperméable
positionné sur une partie du pneumatique à colorer ; ledit agent blanchissant étant ombelliférone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TO 2009A000964

- TO 2010A000850